# EUROPÄISCHE PATENTSCHRIFT

(11) **EP 0 464 248 B1**
(45) Veröffentlichungstag und Bekanntmachung des Hinweises auf die Patenterteilung: **13.10.1993**
(21) Anmeldenummer: 90112876.9
(22) Anmeldetag: 05.07.1990
(51) Int. Cl.: B60R 21/00

(54) **Lenkrad-Anordnung eines Fahrzeuges mit Airbag und Gehäuse der Steuerelektronik für diese Lenkrad-Anordnung**
Vehicle steering-wheel arrangement comprising an airbag and a casing for the electronic control of this steering-wheel arrangement
Aménagement d'un volant de véhicule comprenant un coussin gonflable et un boîtier de commande électronique de cet aménagement de volant

(43) Veröffentlichungstag der Anmeldung: 08.01.1992
(73) Patentinhaber: SIEMENS AKTIENGESELLSCHAFT, 80333 München (DE)
(72) Erfinder: Plankl, Christian, Dipl.-Ing., D-8411 Fussenberg (DE); Guggenberger, Johann, Dipl.-Ing., D-8401 Mintrachting (DE)

(56) Entgegenhaltungen:
- DE-A- 2 755 649
- DE-C- 3 817 481
- FR-A- 2 212 799
- US-A- 3 880 447

## Beschreibung

Die Erfindung betrifft eine Weiterentwicklung einer Lenkrad-Anordnung eines Fahrzeuges, bei dem ein Airbag in der Lenkradnabe angebracht ist, und das im Oberbegriff des Patentanspruches 1 definiert ist. Solche Lenkrad-Anordnungen sind in größerer Anzahl vorbekannt, vgl. z.B.
- DE-A1-27 11 192,
- DE-A1-27 55 649,
- DE-C1-36 21 226 und
- DE-C1-38 17 481.

Die betreffenden Lenkräder werden mit einer kräftigen Mutter an dem Endgewinde der Lenkspindel des Fahrzeuges angeschraubt.

Solche bekannten Lenkrad-Anordnungen haben bereits den auch bei der Erfindung nutzbaren Vorteil,
- daß sie bereits sehr kompakt ist und auch hinsichtlich Design günstig in einem Fahrzeug, z.B. in einem KFZ, unterbringbar ist, sowie
- daß das (zur Abschirmung meistens metallische) Gehäuse der Steuerelektronik so nah an der Zündpille des Gasgenerators untergebracht ist, daß schon deswegen die Einkopplung von elektrischen, magnetischen und elektromagnetischen Störsignalen in die Leitung(en) / Kabel zwischen der Steuerelektronik und der Zündpille leicht vermeidbar sind - solche Einkopplungen könnten nämlich fehlerhafterweise den Gasgenerator des Airbag zünden und damit den Fahrzeuglenker überraschend während einer Fahrt extrem gefährden.

Nachteilig bei diesen vorbekannten Lenkrad-Anordnungen ist aber, wie später der Vergleich mit der Erfindung zeigt,
- ein unnötiger Arbeitsgang während der Montage des Lenkrades im Fahrzeug, sowie
- der mit diesem Arbeitsgang bzw. mit dieser Verschraubungsmethode verbundene Lagerbedarf, besonders auch der Lagerbedarf unmittelbar am Montage-Arbeitsplatz, für die zusätzlichen, kräftigen Muttern, mit denen jeweils das Lenkrad an dem Endgewinde der Lenkspindel angeschraubt wird, sowie
- vor allem auch der für diese Verschraubungsmethode nötige Platzaufwand im Lenkrad selbst, weil zwischen der Mutter und dem Gehäuse der Steuerelektronik - wie der nachträgliche Vergleich mit der Erfindung zeigt: unnötigerweise - viel Platz bleibt.

Daneben sind ähnliche Lenkrad-Anordnungen vorbekannt, bei denen die Stromversorgung vom Bordnetz zu den elektronischen Einheiten im Lenkrad jeweils über einen Schleifring erreicht wird, vgl.
- DE-A1-29 05 618,
- DE-A1-31 08 757,
- DE-A1-36 19 937,
- DE-A1-36 30 685,
- US 3,888,508 und
- US 3,968,979.

Die Erfindung läßt zwar zu, zusatzlich einen solchen Schleifring zu benutzen. Weiterbildungen der Erfindung vermeiden aber einen solchen Schleifring, weil er mitunter für die hier üblichen Spannungen, z.B. wegen Korrosion, Abrieb oder Verdrecken, noch nicht ausreichend zuverlässig ist.

Durch
- DE-A1-30 09 109,
- DE-C2-38 08 778,
- FR-A1-2 477 789 und
- DE-C2-27 46 103

sind bereits spiralförmig um eine Achse gewickelte Leitungs-Zwischenstücke, insbesondere für Lenkrad-Anordnungen mit Airbag in Fahrzeugen, vorbekannt.

Die Aufgabe der Erfindung,
- die Kompaktheit der erfindungsgemäßen Lenkrad-Anordnung weiter zu erhöhen, wodurch bei Bedarf diese Lenkrad-Anordnung auch wenigstens etwas zierlicher und hinsichtlich Design noch flexibler gestaltet werden kann als weniger kompakte bekannte Lenkrad-Anordnungen,
- während der Montage Fehler in narrensicher Weise vermeiden zu können, nämlich die Montage der Lenkrad-Anordnung sogar so zu erleichtern, daß selbst eine Montage in Großserie, besonders in Fließbandfertigung, durch nur angelerntes, also mäßig geschultes Personal ausreichend zuverlässig möglich ist, - vor allem auch, um ein nachträgliches Testen der fertig montierten Lenkrad-Anordnung stark einschränken oder gar entbehren zu können,
- den Aufwand an Lagerplatz, an Arbeitsgängen und damit auch an Arbeitszeit bei der Montage der Lenkrad-Anordnung im Fahrzeug weiter verringern zu können - was ebenfalls besonders bei einer Fließbandfertigung mit wenig geschulten Mitarbeitern vorteilhaft ist, und
- zumindest im Prinzip die Möglichkeit zu bieten, die Lenkrad-Anordnung später, z.B. nach einem Crash mit Verbiegung des Lenkrades und Auslösung des Airbag, in ebenso einfacher Weise wie bei der erstmaligen Montage langfristig zuverlässig reparieren zu können,

wird durch die im Patentanspruch 1 definierte Lenkrad-Anordnung gelöst.

Bei der Erfindung wird also das Gehäuse der Steuerelektronik doppelt ausgenutzt, nämlich
- sowohl als Schutz für die Steuerelektronik
- als auch gleichzeitig sozusagen als die Mutter, mit der das Lenkrad an der Lenkspindel befestigt wird.

Bei der Erfindung dient also das Gehäuse zugleich zur Befestigung des Lenkrades an der Lenkspindel.

Die in den Unteransprüchen angegebenen zusätzlichen Maßnahmen gestatten, zusätzliche Vorteile zu erreichen. Unter anderem gestatten nämlich die Maßnahmen gemäß Patentanspruch
- 2,: eine besonders kompakte platzsparende Lösung zu erreichen,
- 3 bis 5,: besonders einfache Herstellungsmethoden zur Herstellung der Einheit aus dem Gehäuse und der Mutter zu bieten,
- 6 bis 8,: in geschickter Weise das Gehäuse so zu formen, daß später auf besonders einfache Weise die Mutter der Einheit mit dem Endgewinde der Lenkspindel verschraubt werden kann,
- 9,: die Leitung(en) zwischen dem Sensor und der Steuerelektronik so zu verlegen, daß in diese de facto keine störenden elektrischen, magnetischen und elektromagnetischen Einkopplungen mehr stattfinden können, so daß durch solche Störungen ausgelöste, für den Fahrzeuginsassen gefährliche fehlerhafte Airbag-Auslösungen vermieden werden können,
- 10,: eine besonders platzsparende, zuverlässig gegen die störenden Einkopplungen geschützte Lösung zu verwenden,
- 11 bis 16,: in unkomplizierter, besonders auch für Großserienmontagen geeigneter Weise die elektrischen Verbindungen mit den außerhalb des Gehäuses liegenden elektrischen Organen herstellen zu können, und zwar
- 12,: nicht nur die Stromversorgung und Airbagsteuerung, sondern auch eine Kontrollanzeige über die Funktionstüchtigkeit der Airbagsteuerung erreichen zu können, z.B. indem man die betreffende Anzeige an gut sichtbarer Stelle anbringt, z.B. in einer im Lenkrad untergebrachten Anzeigetafel oder am Instrumentenpaneel des Fahrzeuges anbringt,
- 13,: in besonders platzsparender Weise den Gasgenerator anbringen zu können, sowie die elektrische Verbindung zwischen der Steuerelektronik und dem Gasgenerator so anbringen zu können, daß auch bei einem starken Crash diese Verbindung nicht mehr durch Lösen der Steckverbindung zwischen dem Zündpillenstecker und dem Gasgenerator unterbrochen wird, wobei die Steckverbindung(en) im Raume zwischen dem Gehäuse und dem darüber anzubringenden Gasgenerator dann auch während der folgenden Phasen der Montage und während der späteren Benutzungen des Fahrzeuges in besonders einfacher Weise besonders gut geschützt ist / sind,
- 14,: zu erreichen, daß der Gehäusestecker bei der Montage der Lenkrad-Anordnung, nach dem Verschrauben der Mutter mit dem Endgewinde der Lenkspindel, ohne große Schwierigkeiten mit einem Kabelstecker, der an einem Kabel angebracht ist, verbunden werden kann, und zwar weitgehend unabhängig von der Länge und vorgesehenen räumlichen Lage bzw. Befestigung dieses Kabels im Lenkrad, wobei die Steckverbindung(en) im Raume zwischen dem Gehäuse dann auch während der folgenden Phasen der Montage und während der späteren Benutzungen des Fahrzeuges in besonders einfacher Weise besonders gut geschützt ist / sind,
- 15,: einen Schleifring zwischen dem Bordnetz bzw. dessen Stromleitungen einerseits und der Steuerelektronik bzw. dessen Gehäuse andererseits vermeiden zu können, wobei ein Schleifring durch Verschmutzen, Korrodieren und Abnutzen die Zuverlässigkeit der Anordnung beeinträchtigen könnte, wobei überdies die zuverlässige Verbindung zwischen den Stromleitungen einerseits und dem Gehäuse andererseits in raumsparender, montagefreundlicher Weise ermöglicht wird;
- 16,: das Leitungs-Zwischenstück mit wenig Aufwand gegen Beschädigungen und Verschmutzungen schützen zu können, sowie
- 17,: den wichtigsten Bestandteil der erfindungsgemäßen Lenkrad-Anordnung für sich anbieten zu können.

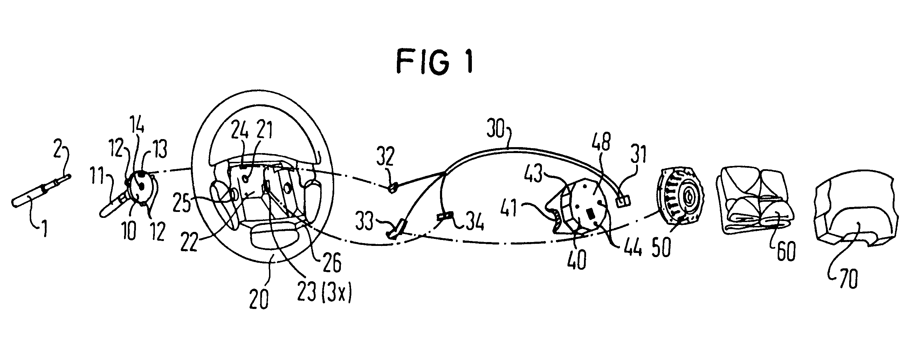

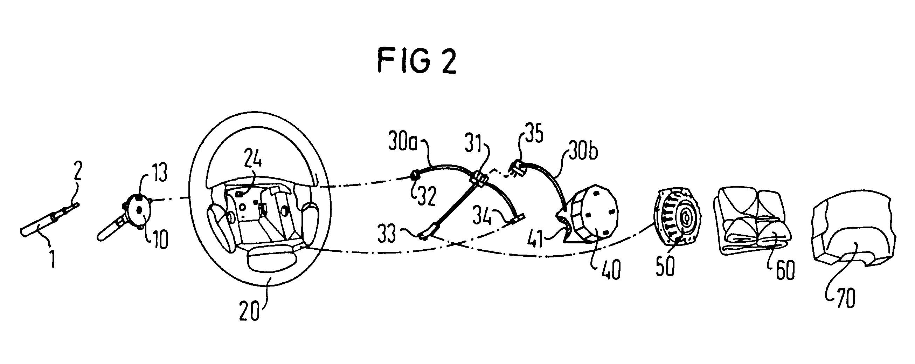

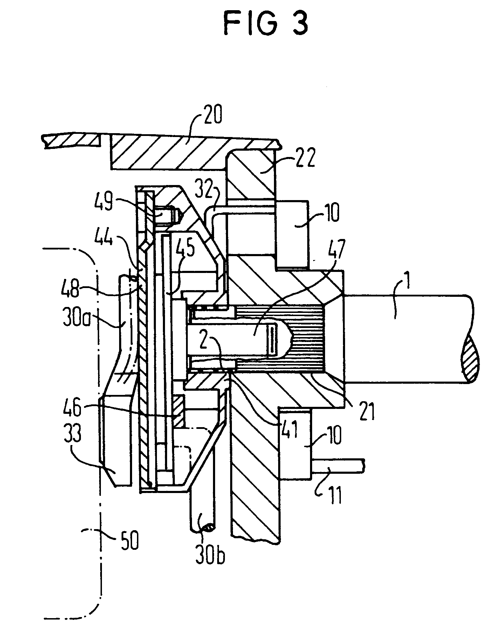

Die Erfindung und ihre Weiterbildungen werden anhand von in den Figuren gezeigten Beispielen weiter erläutert. Dabei zeigt die Figur
- 1: eine Explosionsdarstellung wichtiger Teile eines erfindungsgemäßen Beispiels vor dessen Montage;
- 2: eine Explosionsdarstellung wichtiger Teile eines anderen erfindungsgemäßen Beispiels vor dessen Montage;
- 3: einen Querschnitt durch ein Beispiel für eine das Gehäuse und die Mutter enthaltende Einheit, die bereits mit dem Endgewinde der Lenkspindel verschraubt ist und die z.B. gemäß dem in Figur 2 gezeigten Beispiel verdrahtet bzw. verkabelt sein kann;
- 4: - wegen der Übersichtlichkeit unter Weglassung des Lenkrades - eine Draufsicht auf das in Figur 3 gezeigte Gehäuse der Einheit, in etwa gesehen von der späteren Position des Fahrzeuglenkers; sowie
- 5: - ebenfalls wegen der Übersichtlichkeit unter Weglassung des Lenkrades - eine Draufsicht auf ein anderes Beispiel für das Gehäuse der Einheit, das z.B. gemäß dem in Figur 1 gezeigten Beispiel verdrahtet bzw. verkabelt sein kann, ebenfalls in etwa gesehen von der späteren Position des Fahrzeuglenkers.

Die Figuren 1 und 2 zeigen also nebeneinander wichtige Teile zweier erfindungsgemäßer Beispiele von Lenkrad-Anordnungen eines Fahrzeuges, und zwar zeigen diese Figuren jene wichtigen Teile von links nach rechts in solcher Reihenfolge, wie sie übereinander montiert werden.

Der Airbag 60 wird bei den beiden gezeigten Beispielen im Crashfalle jeweils von dem Gasgenerator 50 aufgeblasen. Beide Figuren zeigen außerdem das Gehäuse 40, in welchem die Steuerelektronik zur Steuerung des Gasgenerators 50, also des Aufblasens des Airbag 60, untergebracht ist. Die im Gehäuse 40 untergebrachte Steuerelektronik zündet im Crashfalle z.B. eine Zündpille des Gasgenerators 60 auf elektrische Weise.

In diesen beiden Beispielen ist nach der Montage der Lenkrad-Anordnung das Gehäuse 40 der Steuerelektronik unter dem Gasgenerator 50, sowie der Gasgenerator 50 unter dem Airbag 60 angebracht, und zwar sowohl das Gehäuse 40 als auch der Gasgenerator 50 jeweils in einer Aussparung 22 im Bereich der Nabe des Lenkrades 20.

Beide Figuren zeigen außerdem die Kapsel 10, welche z.B. einen Schleifring oder ein spiralig gewickeltes Leitungs-Zwischenstück rnthält, - auf letzteres wird später noch weiter eingegangen. Diese Kapsel 10 ist von hinten her auf die Lenkradnabe gedrückt und staubdicht so auf der Rückseite des Lenkrades 20 z.B. an den Befestigungsstellen 12 befestigt, nämlich z.B. angeschraubt, daß das Zentralloch 14 der Kapsel 10 und das Zentralloch 21 des Lenkrades 20 fluchten und daß der Anschluß 13 der Kapsel 10 unter das Fenster 24 der Aussparung 22 des Lenkrades 20 zu liegen kommt.

Beide Figuren zeigen außerdem die Lenkspindel 1. Dessen Endgewinde 2 ist in der fertig montierten Lenkrad-Anordnung durch die fluchtenden Zentrallöcher 14/21 gesteckt. Das Lenkrad 20 ist an dem durch das Zentralloch 21 ragenden Ende des Endgewindes 2 mittels einer Mutter 41 angeschraubt, welche erfindungsgemäß bei beiden gezeigten Beispielen jeweils an der Unterseite des Gehäuses 40 starr mit diesem Gehäuse 40 zu einer kompakten Einheit 40/41 verbunden ist. Die Mutter 41 ist also z.B. mit der Unterseite des Gehäuses 40 verschweißt.

Bei beiden, in den Figuren 1 und 2 gezeigten Beispielen ist jeweils das (zur Abschirmung meistens metallische) Gehäuse 40 der Steuerelektronik in der (zur Abschirmung z.B. ebenfalls metallische oder mit Metall überzogene) Lenkradnabe 22 so nah an der Zündpille des Gasgenerators 50 untergebracht, daß schon deswegen die Einkopplung von elektrischen, magnetischen und elektromagnetischen Störsignalen in die Leitung(en) / Kabel 30 bzw. 30a/30b zwischen der Steuerelektronik und der Zündpille leicht vermeidbar sind - solche Einkopplungen könnten nämlich fehlerhafterweise den Gasgenerator des Airbag zünden und damit den Fahrzeuglenker überraschend während einer Fahrt extrem gefährden.

Bei beiden Beispielen der Erfindung wird das Gehäuse 40 mehrfach ausgenutzt: vor allem dient es sowohl als Schutz gegen mechanische, magnetische, kapazitive und elektromagnetische Beeinträchtigungen der in dem Gehäuse 40 angebrachten Steuerelektronik, als auch sozusagen als die Außenflächen der Mutter, mit welcher das Lenkrad 20 an der Lenkspindel 1 befestigt wird.

Bei der Erfindung kann das Gehäuse 40 am Lenkrad 20 z.B. dadurch befestigt werden,
- daß entweder zuerst das Lenkrad 20 mit seinem Zentralloch 21 über das durch das Zentralloch 14 der Kapsel 10 hindurchragende Ende des Endgewindes 2 der Lenkspindel 1 gesteckt wird,
   · wonach die Kapsel 10 mit der Unterseite des Lenkrades 20 so befestigt wird, daß der Anschluß 13 unter das Fenster 24 zu liegen kommt, und
   · wonach die an der Gehäuseunterseite befestigte Mutter 41 durch Drehen am Gehäuse 40 mit dem Endgewinde 2 verschraubt wird;
- oder daß - im Allgemeinen noch besser - zuerst die Kapsel 10 an der Unterseite des Lenkrades 20 so befestigt wird, daß die beiden Zentrallöcher 14 und 21 fluchten und der Anschluß 13 unter das Fenster 24 zu liegen kommt, wonach das Endgewinde 2 durch die Zentrallöcher 14 und 21 gesteckt und mit der Schraube 41 durch Drehen am Gehäuse 40 verschraubt wird.

Vgl. damit auch den in Figur 3 gezeigten Querschnitt eines Beispiels für das Gehäuse 40, das mit der am ihm befestigten Mutter 41 in der Lenkradnabe 22 mit dem Endgewinde 2 der Lenkspindel 1 verschraubt ist. - Die der Gehäuseunterseite gegenüberliegenden Gehäuseoberseite 48 liegt also, bei einer Betrachtung in Richtung parallel zur Achse der Lenkspindel 1, nach der Montage angenähert in Richtung zur späteren Position des Fahrers des Fahrzeuges.

Im fertig montierten Zustand der in den Figuren 1 und 2 gezeigten Beispiele ist der Airbag 60 durch die Abdeckkappe 70 abgedeckt, wobei diese Abdeckkappe 70 auf ihrer Unterseite z.B. Stifte aufweisen kann, die in die Löcher 25 des Lenkrades eingeführt werden, wobei diese Abdeckkappe 70 auch die Taste für die Hupe des Fahrzeuges bilden kann. Der Fahrzeuglenker sieht also während der Fahrt nur die designmäßig gut gestaltbare Abdeckkappe 70 im Bereich der Lenkradnabe, aber jeweils nicht den darunter vor der Lenkradnabe 22 liegenden Airbag 60.

Die Erfindung gestattet, vor allem durch die starre Verbindung der Mutter 41 mit dem Gehäuse 40, das Gehäuse 40 so formen, daß es nahezu völlig den Raum zwischen der Lenkradnabe 22 und dem Gasgenerator 50 ausfüllt, vgl. auch den in Figur 3 gezeigten Querschnitt. Durch die Erfindung, vor allem auch durch die starre Verbindung zwischen der Mutter 41 und dem Gehäuse 40, kann man also eine Raumeinsparung zwischen der Lenkradnabe 22 und dem Gasgenerator 50, also eine besonders große Kompaktheit der Lenkrad-Anordnung erreichen, wodurch bei Bedarf diese Lenkrad-Anordnung auch zumindest etwas zierlicher und hinsichtlich Design noch flexibler gestaltet werden kann als weniger raumsparende bekannte Lenkrad-Anordnungen.

Zusätzlich kann man durch die Erfindung nicht nur eine Reduktion des Aufwandes an Lagerplatz am Montage-Arbeitsplatz, also z.B. am Fließband, erreichen, sondern auch den Wegfall der Nachschubregelung für diskrete Muttern an diesem Montage-Arbeitsplatz. Außerdem kann man am Montage-Arbeitsplatz wegen des Wegfalls von diskreten Muttern eine Reduktion an Montage-Arbeitsgängen und damit auch an Montage-Arbeitszeit erreichen, was besonders bei einer Fließbandfertigung mit wenig geschulten Mitarbeitern vorteilhaft ist.

Durch die Erfindung, besonders durch die zuverlässige Befestigung des Gehäuses 40 im Lenkrad 20, vor allem durch die starre Verbindung zwischen der Mutter 41 und dem Gehäuse 40, kann man außerdem erreichen, daß das nachträgliche Testen der fertig montierten Lenkrad-Anordnung, z.B. ob das Gehäuse 40 richtig befestigt ist, einschränkt oder gar entbehrt werden kann.

Schließlich bietet die Erfindung, zumindest im Prinzip, die Möglichkeit, die Lenkrad-Anordnung später, z.B. nach einem Crash mit Verbiegung des Lenkrades 20 und mit Auslösung des Airbag 60, in ebenso einfacher Weise wie bei der erstmaligen Montage langfristig zuverlässig zu reparieren.

Durch die Erfindung, vor allem durch den Wegfall der diskreten, für sich zu beschaffenden und für sich zu montierenden Muttern, kann man also erreichen, daß bei der Montage Zeit-, Raum- und Material-Verluste sowie Montagefehler weitgehend in narrensicher Weise vermieden werden. Die Montage der Lenkrad-Anordnung kann durch die Erfindung sogar so erleichtert werden, daß eine Montage in Großserie, besonders in Fließbandfertigung, selbst durch nur angelerntes, also mäßig geschultes Personal ausreichend zuverlässig möglich ist.

Um die Mutter 41 mit dem Endgewinde 2 leicht verschrauben zu können, vgl. auch die Figuren 3 bis 5, kann das Äußere des Gehäuses 40 so geformt werden, daß später auf besonders einfache Weise die Mutter 41 der Einheit 40/41 mit dem Endgewinde 2 der Lenkspindel 1 verschraubt werden kann. Dazu kann z.B. das Gehäuse 40 an seinem Umriß bzw. Umfang jeweils die in den Figuren 1, 2 und 4 gezeigten Seitenflächen 43 aufweisen, welche mehr oder weniger den von einem Schraubenschlüssel bzw. Drehmomentschlüssel mit entsprechenden Adapter zu erfassenden üblichen Seitenflächen von Muttern entsprechen. Zum Verschrauben kann aber - zusätzlich oder ausschließlich - das Gehäuse 40 an seiner Oberseite jeweils auch die in den Figuren 1 und 2 angedeuteten Noppen, Stifte oder Löcher 44 besitzen, um welche bzw. in welche jeweils Haken bzw. Stifte eines entsprechenden angepaßten Werkzeuges gesteckt werden können, um mittels dieses Werkzeuges die Mutter 41 mit dem Endgewinde 2 zu verschrauben. Zusätzlich oder ausschließlich, kann aber das Gehäuse 40, besonders an seinem Umfang, zum Verschrauben z.B. auch Nuten bzw. Buchten 44a und/ oder Noppen bzw. Ausstülpungen besitzen, vgl. die Figur 5, in welche entsprechend geformte Haken bzw. Ösen eines entsprechenden angepaßten Werkzeuges gesteckt werden können.

Diese beiden in den Figuren 1 und 2 gezeigten Beispiele unterscheiden sich vor allem durch die Art der Verkabelung zwischen den einzelnen Teilen der Lenkrad-Anordnungen:

Die Figur 1 zeigt einen Kabelbaum 30, dessen Kabelstecker 31 in einen z.B. sechspoligen Gehäusestecker 42 des Gehäuses 40 gesteckt wird. Der Stecker 33 ist z.B. der z.B. zweipolige Zündpillenstecker, welcher in einen entsprechendes Steckergegenstück im Boden des Gasgenerators 50 gesteckt wird. Der z.B. ebenfalls zweipolige Netzstecker 32 wird durch das Fenster 24 in der Lenkradnabe 22 mit einem Anschluß 13 an der Kapsel 10 verbunden, wobei, wie bereits angegeben, in dieser Kapsel 10 z.B. ein Schleifring oder ein spiralig gewickeltes Leitungs-Zwischenstück angebracht ist. Damit das Kabel 30 und die einzelnen Zuleitungen zwischen dem Kabel 30 und dessen Stecker, vgl. 32 und 33, bei der Fahrt nicht vibrieren können und bei einem Crash möglichst wenig Zugkraft auf diese Stecker ausüben können, werden in dem in Figur 1 gezeigten Beispiel dieses Kabel bzw. dessen Zuleitungen in der Lenkradnabe 22 in die hier drei schlitzförmige Kabelhalterungen 23 geklipst.

Die Figur 2 zeigt hingegen ein z.B. sechsadriges Kabel 30b, das einerseits mit Anschlüssen der im Gehäuse 40 untergebrachten Steuerelektronik und das andererseits mit dem z.B. sechspoligen Gehäusestecker 35 verbunden ist. Dieser Gehäusestecker 35 liegt hier also außerhalb des Gehäuses 40, im Gegensatz zu dem in Figur 1 gezeigten Beispiel. Der Gehäusestecker 35 ist seinerseits in den Kabelstecker 31 gesteckt, an den über hier drei z.B. zweiadrige Kabel 30a der Zündpillenstecker 33 und der Netzstecker 32 verbunden ist. Der Zündpillenstecker 33 wird in das entsprechende Steckergegenstück im Boden des Gasgenerators 50 gesteckt, und der Netzstecker 32 durch das Fenster 24 mit dem Anschluß 13 an der Kapsel 10 verbunden, wobei auch hier in dieser Kapsel 10 z.B. ein Schleifring oder ein spiralig gewickeltes Leitungs-Zwischenstück angebracht ist. Damit auch bei diesem Beispiel die Kabel 30a und 30b bei der Fahrt nicht vibrieren können und bei einem Crash möglichst wenig Zugkraft auf seine Stecker ausüben können, werden auch in diesem gezeigten Beispiel diese Kabel 30a und 30b in der Lenkradnabe in die in Figur 2 angedeuteten drei gleichartigen Kabelhalterungen geklipst.

Auch für die Anbringung des Gehäusesteckers 42 bzw. 35, vgl. besonders die Figuren 1 und 2, kann man je nach Bedarf verschiedene Varianten wählen, z.B. besonders um je nach Bedarf in unkomplizierter, besonders auch für Großserienmontagen geeigneter Weise die elektrischen Verbindungen mit den außerhalb des Gehäuses 40 liegenden elektrischen Teilen bzw. Organen herstellen zu können.

So kann man z.B.
- die Einheit 40/41 bzw. das Gehäuse 40,
   · teils zur Stromversorgung von in ihm enthaltenen elektrischen Bauteilen 45 und
   · teils zur Signalabgabe nach außen aus dem Gehäuse 40 heraus,
   nicht nur einen einzigen, sondern jeweils sogar mehrere Stecker, z.B. mehrere mehrpolige Gehäusestecker 42, 35 anbringen, vgl. damit die Figuren 1 und 2, die aber jeweils nur einen einzigen Gehäusestecker 42 bzw. 35 pro Gehäuse 40 zeigen.

Außerdem kann man, ausschließlich oder zusätzlich, den Gehäusestecker 42 bzw. 35 - oder eben einen oder mehrere der Gehäusestecker 42, 35 - mit einem oder mit mehreren, z.B. mit insgesamt sechs, Polen ausstatten, welche, vgl. die Figuren 1 und 2,
- teils für die Stromversorgung dienen und dazu z.B. zwei Pole aufweisen, welche über den Netzstecker 32, über den Anschluß 13 der Kapsel 10 und über die Stromversorgungsleitung 11 mit dem Bordnetz verbunden werden,
- teils für die Steuerung dienen und dazu z.B. zwei Pole aufweisen, welche über den Zündpillenstecker 33 mit der Zündpille des Gasgenerators 50 verbunden werden, und/oder
- z.B. teils für eine Anzeigeeinheit, vgl. z.B. 34, dienen und dazu z.B. zwei Pole aufweisen, wobei diese Anzeigeeinheit 34 z.B. ein Glühlämpchen oder ein LED-Lämpchen darstellen kann, das an gut sichtbarer Stelle im Instrumentenpaneel des Fahrzeuges oder auch am Lenkrad 20 selbst angebracht werden kann, nämlich z.B. im dazu im Lenkrad 20 angebrachten Schlitz 26. Diese Anzeigeeinheit 34 kann z.B. zur Anzeige der Funktionstüchtigkeit bzw. zur Anzeige einer erkannten Funktionsuntüchtigkeit z.B. der Steuerelektronik dienen, und/oder Funktions(un)tüchtigkeit der Stromversorgung 11 aus dem Bordnetz und/oder der Zündpille des Gasgenerators 50. Dadurch kann man eine Kontrollanzeige über die Stromversorgung bzw. über die Airbagsteuerung erreichen.

Außerdem kann man, ausschließlich oder zusätzlich, den Gehäusestecker 42 bzw. 35 - oder eben einen oder mehrere der Gehäusestecker 42, 35 - mit Polen ausstatten, von denen, vgl. die Figuren 1, 2 und 3, in der fertig montierten Lenkrad-Anordnung ein oder mehrere, z.B. zwei von sechs, Pole des Gehäusesteckers 42, 35 zur Verbindung über ein Kabel 30 bzw. über einen Kabelbaum 30a, 30b mit einem Zündpillenstecker 33 dienen. Dieser Zündpillenstecker 33 wird in den Gasgenerator 50 des Airbag 60 gesteckt und befindet sich danach in der fertig montierten Lenkrad-Anordnung in einem engen Spalt zwischen dem Gehäuse 40 und dem Gasgenerator 50. Auf diese Weise kann man nicht nur den Gasgenerator 50 in besonders platzsparender Weise in der Lenkradnabe 22 anbringen. Man kann dann auch die elektrische Verbindungen, vgl. 33/50 in Fig. 3, zwischen der Steuerelektronik im Gehäuse 40 und dem Gasgenerator 50 so solide anbringen, daß auch bei einem starken Crash diese Verbindungen 33/50 wegen der Enge dieses Spaltes nicht mehr durch Lösen der Steckverbindung zwischen dem Zündpillenstecker 33 und dem Gasgenerator 50 unterbrochen wird, wobei die Steckverbindung(en) 33/50 im Raume zwischen dem Gehäuse 40 und dem darüber anzubringenden Gasgenerator 50 dann auch während der folgenden Phasen der Montage und während der späteren Benutzungen des Fahrzeuges in besonders einfacher Weise besonders gut geschützt ist / sind.

Außerdem kann man, ausschließlich oder zusätzlich, den, z.B. sechspoligen, Gehäusestecker, vgl. 42 in den Figuren 1 und 5, - oder eben einen oder mehrere solche Gehäusestecker - in oder an der Oberseite 48 des Gehäuses 40 anbringen. Dadurch kann man erreichen, daß der Gehäusestecker 42 bei der Montage der Lenkrad-Anordnung, nach dem Verschrauben der Mutter 41 mit dem Endgewinde 2 der Lenkspindel 1, ohne große Schwierigkeiten mit einem Kabelstecker 31, der an einem Kabel 30 angebracht ist, verbunden werden kann, und zwar weitgehend unabhängig von der vorgesehenen Länge und vorgesehenen räumlichen Lage bzw. Befestigung dieses Kabels 30 in der Nabe 22 des Lenkrades 20, wobei die Steckverbindung(en) 42/31 im - auch hier sehr eng gestaltbaren Spalt / Raume zwischen der Oberseite 48 des Gehäuses 40 und dem Gasgenerator 50 dann auch während der folgenden Phasen der Montage und während der späteren Benutzungen des Fahrzeuges, besonders auch bei einem Crash, in besonders einfacher Weise besonders gut gegen unbeabsichtigtes Lösen dieser Steckverbindung(en) 42/31 geschützt ist / sind.

Die Verbindung mit dem Bordnetz kann man bei der Erfindung und bei deren Weiterbildungen ebenfalls leicht den jeweiligen Bedürfnissen anpassen. So kann man, ausschließlich oder zusätzlich, die für die Stromversorgung dienenden Pole des Gehäusesteckers 42 bzw. 35 - oder eben mehrerer solcher Gehäusestecker 42, 35 - über ein entsprechend vieladriges Zwischenkabel, vgl. 30 in der Figur 1 und 30a in der Figur 2, über einen oder mehrere Anschlüsse 13 eines in der Kapsel 10 untergebrachten Leitungs-Zwischenstückes und über die Stromversorgungs-Leitung 11 mit dem Bordnetz des Fahrzeuges verbinden. Das Leitungs-Zwischenstück selber kann dann verschieden gestaltet werden.

So kann es z.B. ein Schleifring sein.

Es kann aber auch ein spiralförmig um die Lenkspindel 1 so locker gewickeltes Leitungs-Zwischenstück sein, daß dieses Leitungs-Zwischenstück beim Drehen des Lenkrades 20 in beide Drehrichtungen bis zum jeweiligen Anschlag nicht beschädigt wird. Mit einem so gewickelten Leitungs-Zwischenstück kann man einen Schleifring zwischen dem Bordnetz bzw. dessen Stromleitungen 11 einerseits und der Steuerelektronik bzw. dessen Gehäuse 40 andererseits vermeiden, wobei ein Schleifring durch Verschmutzen, Korrodieren und Abnutzen mitunter die Zuverlässigkeit der Anordnung beeinträchtigen könnte, wobei überdies die zuverlässige Verbindung zwischen den Stromleitungen 11 einerseits und dem Gehäuse 40 andererseits in raumsparender, montagefreundlicher Weise ermöglicht wird. Überdies kann man das spiralförmig gewickelte Leitungs-Zwischenstück, wie gezeigt wurde, in der auf der Rückseite der Lenkradnabe 22 befestigten Kapsel 10 unterbringen, um das Leitungs-Zwischenstück mit wenig Aufwand gegen Beschädigungen und Verschmutzungen zu schützen.

Bei beiden, in den Figuren 1 und 2 gezeigten Verkabelungsarten kann man die Lenkrad-Anordnung besonders aufwandsarm und narrensicher z.B. wie folgt montieren :
- Nach der bereits beschriebenen Befestigung der Kapsel 10 an der Unterseite der Lenkradnabe 22, bei welcher die Zentrallöcher 14 und 21 fluchten und der Anschluß 13 unter das Fenster 24 zu liegen kommt, wird der - z.B. zweipolige - Netzstecker 32 auf den - dann zweipoligen - Anschluß 13 der Kapsel 10 gesteckt und der Kabel(baum)abschnitt, der nahe diesem Netzstecker 32 liegt, in die dafür vorgesehenen Kabelhalterung 23 geklipst,
- danach wird die Ausfallwarn-Anzeigeeinheit 34 in den entsprechenden Schlitz 26 des Lenkrades 20 eingerastet und der Kabel(baum)abschnitt, der nahe dieser Anzeigeeinheit 34 liegt, in die eigens dafür vorgesehenen Kabelhalterung 23 geklipst,
- danach wird das so vorbereitete Lenkrad 20 auf die Lenkspindel 1 aufgesetzt, indem das Endgewinde 2 durch die Zentrallöcher 14 und 21 geführt wird, wonach das Lenkrad 20 mittels der Mutter 41 durch Drehen des Gehäuses 40 am Endgewinde 2, das aus dem Zentralloch 21 herausragt, festgeschraubt wird,
- danach wird der - z.B. sechspolige - Kabelstecker 31 mit dem - ebenfalls sechspoligen - Gehäusestecker 42 bzw. 35 verbunden und das Kabel 30 bzw. der Kabelbaum 30a/30b in eine eigens hierfür vorgesehene Kabelhalterung eingeklipst,
- wonach der Zündpillenstecker 33 auf sein entsprechendes Gegenstück am Gasgenerator 50 gesteckt wird und der Gasgenerator 50 (samt Airbag 60 und Abdeckung 70) am Lenkrad 20 befestigt, z.B. angeschraubt, wird; - wenn dabei, wie beschrieben, der Zündpillenstecker 33 in einem sehr engen Spalt zwischen dem Gehäuse 40 und dem Gasgenerator 50 zu liegen kommt, ist die Verbindung 33/50 auch bei einem Crash gegen Lösen bereits gesichert.

Die starre Verbindung zwischen der Mutter 41 und dem Gehäuse 40 kann nicht nur durch Verschweißen der beiden erreicht werden, sondern durch eine ganze Reihe weiterer Maßnahmen, die von Fall zu Fall für sich bedeutsame Vorteile besitzen :

So kann man z.B. die Mutter 41 bzw. ihr Muttergewinde 41 an der Unterseite des Gehäuses 40 zumindest teilweise in das Gehäuse 40 hinein vertieft anbringen, u.a. um eine besonders kompakte platzsparende Lösung zu erreichen, vgl. die Figur 3. Hierbei kann man, um die Einheit 40/41 aus dem Gehäuse 40 und der Mutter 41 mit besonders einfachen Methoden herstellen zu können, z.B.
- die vorgefertigte Mutter 41 z.B. in einen vorgeformten Flansch der Unterseite des Gehäuses 40 pressen, oder
- die Mutter 41 durch ein Stahleinlegeteil 41 bilden, welches von einem durch Druckguß hergestellten Flansch, der in der Unterseite des Gehäuses 40 angebracht ist, umfaßt ist, wobei beim Erstarren des Druckgußmaterials die Mutter 41 durch das Schrumpfen dieses Materials fest im Flansch sitzt.

Um auf einfache Weise eine solche feste Verbindung zwischen der Mutter 41 und dem Gehäuse 40 zu erreichen, kann man aber z.B. auch die Mutter 41 zusammen mit der Unterseite des Gehäuses 40 aus einem Stück gießen, so daß die Mutter 41 und die Unterseite des Gehäuses 40 (evtl. auch fast das ganze Gehäuse 40 bis auf eine verschließbare Öffnung desselben) eine kompakte gegossene Einheit (also z.B. nahezu als ganzes eine Druckgußteil-Einheit 40/41) bilden, deren Muttergewinde 41 durch die Gußform vorgegeben, und/oder durch nachträgliches Gewindeschneiden hergestellt ist.

Die Form des Gehäuses 40 kann man bei der Erfindung an die besonderen sonstigen Bedürfnisse des Herstellers, Benutzers und/oder Reparatur-Mechanikers anpassen. Z.B. kann man das Gehäuse 40 in geschickter Weise so formen, daß später auf besonders einfache Weise die Mutter 41 der Einheit 40/41 mit dem Endgewinde 2 der Lenkspindel 1 verschraubt werden kann. Dazu kann man z.B.
- das Gehäuse 40, bei Betrachtung in Richtung zu seiner 40 Oberseite 48 parallel zur Achse der Lenkspindel 1, zum Verschrauben an seinem Umriß mit Seitenflächen 43 ausstatten, die mehr oder weniger den von einem Schraubenschlüssel zu erfassenden Flächen einer Mutter entsprechen, vgl. dazu die Figuren 1, 2 und 4, und/oder
- das Gehäuse 40, bei Betrachtung in Richtung zu seiner 40 Oberseite 48 parallel zur Achse der Lenkspindel 1, zum Verschrauben an seinem Umriß mit Seitenflächen ausstatten, welche Nuten bzw. Buchten 44a und/oder Noppen bzw. Ausstülpungen besitzen, vgl. dazu die Figur 5, und/oder
- die Oberseite 48 des Gehäuses 40 mit Hilfsmitteln wie Noppen, Haken, Spitzen und/oder Löchern 44 ausstatten, um die Schraube 41 mittels eines Werkzeuges, welches in bzw. um diese Hilfsmittel / Löcher 44 steckbare Haken bzw. Stifte aufweist, mit dem Endgewinde 2 der Lenkspindel 1 verschrauben zu können, vgl. dazu die Figuren 1 und 2.

Im Inneren des Gehäuses 40 befindet sich also die Steuerelektronik, vgl. den in der Figur 3 gezeigten Querschnitt durch den Lenkradnabenbereich einer fertig montierten Lenkrad-Anordnung - hier gemäß der Figur 2 - , wobei das Endgewinde 2 durch das Zentralloch 21 des Lenkrades 20 spielfrei gesteckt ist. In einer Bohrung innerhalb des Endgewindes 2 befindet sich der am Gehäuse 40 starr befestigte - z.B. mechanische -Crashsensor 47. Im Inneren des Gehäuses 40 befindet sich zusätzlich ein - z.B. piezoelektrischer - Crashsensor.

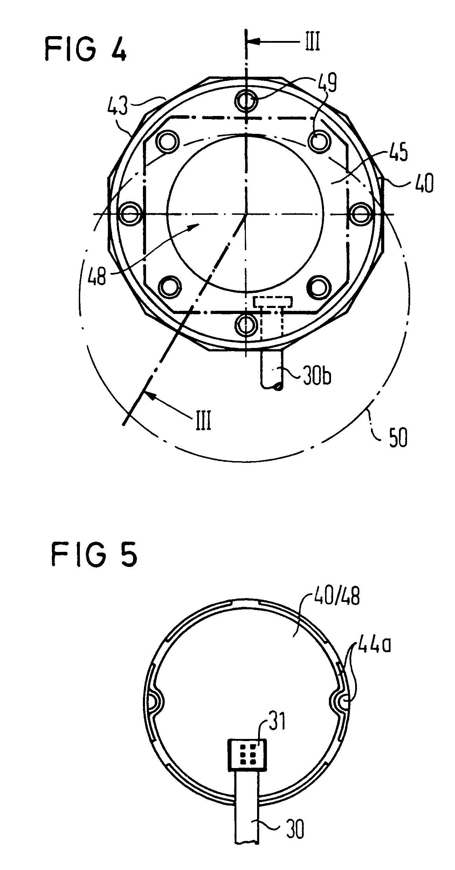

Die Steuerelektronik kann im Gehäuseinneren z.B. auf der in den Figuren 3 und 4 angedeuteten Leiterplatte 45 so raumsparend angebracht sein, daß das Gehäuse 40 ganz flach gemacht werden kann, wodurch die Dicke der Lenkrad-Anordnung, gemessen in Richtung der Achse der Lenkspindel 1, besonders klein gemacht werden kann. Um die Leiterplatte 45 bzw. deren Steuerelektronik-Teile leicht in das Gehäuse einbringen und wieder auswechseln zu können, kann das Gehäuse 40, vgl. die Figuren 3 und 4, an seiner Oberseite 48 einen Deckel 48 besitzen, der z.B. mittels Schrauben 49 an den Rest des Gehäuses 40 angeschraubt werden kann. In der Figur 5 wird angedeutet, daß dieser Deckel 48 des Gehäuses 40 auch den Gehäusestecker tragen kann; in dem in den Figuren 3 und 4 gezeigtem Beispiel ist statt dessen das Kabel 30b eingezeichnet, das hier das Gehäuse 40 beispielhaft noch am Rande der Unterseite des Gehäuses 40 verläßt. - In der Figur 4 wurde zusätzlich angedeutet, daß der Gasgenerator aus Platzgründen im Lenkrad 20 auch etwas versetzt gegen die Mitte des Gehäuses 40 angebracht sein kann.

Bisher wurde, um sprachlich nicht allzu komplizierte Formulierungen verwenden zu müssen, davon ausgegangen, daß in dem Gehäuse 40 die Steuerelektronik, also sozusagen die gesamte Steuerelektronik, zur Steuerung des Aufblasens des Airbag 60, untergebracht sei. Bei der Erfindung kann aber durchaus stets ein Teil der Steuerelektronik auch außerhalb des Gehäuses 40 oder auf dessen Oberfläche angebracht sein, und/oder es können Teile, die mit der Steuerelektronik zusammenarbeiten aber sonst außerhalb des Gehäuses 40 angebracht werden, auch am oder innerhalb der Gehäuses 40 angebracht werden. So kann z.B.
- im oder am Gehäuse 40 auch mindestens einen einziger Crashsensor 46, 47 angebracht sein, vgl. den - z.B. analog arbeitenden, rein elektronischen, z.B. piezoelektrischen - Crashsensor 46 in Figur 3, wodurch die Leitung(en) zwischen dem Sensor und der Steuerelektronik so verlegt werden können, daß in diese de facto keine störenden elektrischen, magnetischen und elektro-magnetischen Einkopplungen mehr stattfinden können, so daß durch solche Störungen ausgelöste, für den Fahrzeuginsassen gefährliche fehlerhafte Airbag-Auslösungen vermieden werden können; und/oder
- mindestens ein einziger Crashsensor auch abseits vom Gehäuse 40 angebracht sein, z.B.
   · nahe den Stoßstangen des Fahrzeuges, um sehr differenziert die Art des Crashes (Frontalcrash, Schrägaufprall, Seitenaufprall, Heckaufprall) diagnostizieren zu können, und/oder
   · auch nahe am Gehäuse 40 zentrisch so in der Achse der Mutter 41 angebracht sein, daß sich, nach dem Verschrauben der Mutter 41 mit dem Endgewinde 2 der Lenkspindel 1, der Crashsensor 47 - z.B. direkt unter der Unterseite des Gehäuses 40 am Gehäuse 40 starr befestigt und durch extrem kurze Leitungen mit dem Gehäuse 40 verbunden - in einer in der Achse des Endgewindes 2 liegenden Aussparung bzw. Bohrung befindet, vgl. dazu die Figur 3; diese in der Figur 3 gezeigte Variante hat den erheblichen zusätzlichen Vorteil, eine besonders platzsparende, zuverlässig gegen die störenden Einkopplungen geschützte Lösung zu bieten.

Die Erfindung umfaßt nicht nur die Lenkrad-Anordnung als solche, sondern auch für sich jeweils alleine die Einheit 40/41, enthaltend das Gehäuse 40 und die mit dem Gehäuse 40 starr verbundene Mutter 41, welche für eine Lenkrad-Anordnung bestimmt ist.

## Patentansprüche

1. Lenkrad-Anordnung eines Fahrzeuges, dessen Lenkrad (20) mittels eines durchgehenden Zentralloches (21) an einem Endgewinde (2) einer Lenkspindel (1) durch eine Mutter (41) befestigbar ist, enthaltend
- einen am Lenkrad (20) im Bereich der Lenkradnabe (22) befestigten Airbag (60), und
- ein ebenfalls am Lenkrad (20) befestigtes Gehäuse (40) einer bei einem Unfall das Aufblasen des Airbag (60) steuernden Steuerelektronik (45), wobei das am Lenkrad (20) befestigte Gehäuse (40)
· mit seiner (40) Unterseite in Richtung zur Lenkradnabe (22) und damit zum Zentralloch (21) sowie
· mit seiner (40) der Unterseite gegenüberliegenden Oberseite (48) von der Lenkradnabe (22) weg, also angenähert in Richtung zur späteren Position des Fahrers des Fahrzeuges, gerichtet ist,
**dadurch gekennzeichnet**, daß
- die Unterseite des Gehäuses (40) und die Mutter (41) starr miteinander zu einer Einheit (40/41) verbunden, also z.B. miteinander verschweißt, sind und
- damit das Gehäuse (40) am Lenkrad (20) durch Verschrauben der Mutter (41) mit dem Endgewinde (2) befestigbar ist.

2. Lenkrad-Anordnung nach Patentanspruch 1,
**dadurch gekennzeichnet**, daß
- die Mutter (41) bzw. ihr Muttergewinde (41) an der Unterseite des Gehäuses (40) zumindest teilweise in das Gehäuse (40) hinein vertieft angebracht ist.

3. Lenkrad-Anordnung nach Patentanspruch 2,
**dadurch gekennzeichnet**, daß
- die vorgefertigte Mutter (41) in einen vorgeformten Flansch der Unterseite des Gehäuses (40) gepreßt ist.

4. Lenkrad-Anordnung nach Patentanspruch 2,
**dadurch gekennzeichnet**, daß
- die Mutter (41) ein Stahleinlegeteil (41) bildet, welches (41) von einem durch Druckguß hergestellten Flansch, der in der Unterseite des Gehäuses (40) angebracht ist, umfaßt ist.

5. Lenkrad-Anordnung nach Patentanspruch 1 oder 2,
**dadurch gekennzeichnet**, daß
- die Mutter (41) zusammen mit der Unterseite des Gehäuses (40) eine aus einem Stück gegossene Einheit (40/41), z.B. eine Druckgußteil-Einheit (40/41), bildet, deren Muttergewinde (41) durch die Gußform und/oder durch nachträgliches Gewindeschneiden hergestellt ist.

6. Lenkrad-Anordnung nach einem der vorhergehenden Patentansprüche,
**dadurch gekennzeichnet**, daß
- das Gehäuse (40), bei Betrachtung in Richtung zu seiner (40) Oberseite (48) parallel zur Achse der Lenkspindel (1), zum Verschrauben an seinem (40) Umriß Seitenflächen (43) aufweist, die mehr oder weniger den von einem Schraubenschlüssel zu erfassenden Flächen einer Mutter entsprechen.

7. Lenkrad-Anordnung nach einem der vorhergehenden Patentansprüche,
**dadurch gekennzeichnet**, daß
- das Gehäuse (40), bei Betrachtung in Richtung zu seiner (40) Oberseite (48) parallel zur Achse der Lenkspindel (1), zum Verschrauben an seinem (40) Umriß Seitenflächen aufweist, welche Nuten bzw. Buchten (44a) und/oder Noppen bzw. Ausstülpungen besitzen.

8. Lenkrad-Anordnung nach einem der vorhergehenden Patentansprüche,
**dadurch gekennzeichnet**, daß
- die Oberseite (48) des Gehäuses (40) Löcher (44) besitzt zum Verschrauben mittels eines Werkzeuges, welches in diese Löcher (44) steckbare Haken bzw. Stifte aufweist.

9. Lenkrad-Anordnung nach einem der vorhergehenden Patentansprüche,
**dadurch gekennzeichnet**, daß
- im oder am Gehäuse (40) auch mindestens einen einziger Crashsensor (46, 47) angebracht ist.

10. Lenkrad-Anordnung nach einem der vorhergehenden Patentansprüche,
**dadurch gekennzeichnet**, daß
- mindestens ein einziger Crashsensor (47) am Gehäuse (40) zentrisch so in der Achse der Mutter (41) angebracht ist, daß sich, nach dem Verschrauben der Mutter (41) mit dem Endgewinde (2) der Lenkspindel (1), der Crashsensor (47) in einer in der Achse des Endgewindes (2) liegenden Aussparung bzw. Bohrung befindet.

11. Lenkrad-Anordnung nach einem der vorhergehenden Patentansprüche,
**dadurch gekennzeichnet**, daß
- die Einheit (40/41) bzw. das Gehäuse (40),
· teils zur Stromversorgung von in ihm (40) enthaltenen elektrischen Bauteilen (45) und
· teils zur Signalabgabe nach außen aus dem Gehäuse (40) heraus,
einen oder mehrere mehrpolige Gehäusestecker (42, 35) aufweist.

12. Lenkrad-Anordnung nach Patentanspruch 11,
**dadurch gekennzeichnet**, daß
- der Gehäusestecker (42, 35) oder einer oder mehrere der Gehäusestecker (42, 35) einen oder mehrere, z.B. insgesamt sechs, Pole besitzen, welche
· teils für die Stromversorgung,
· teils für die Steuerung der Zündpille des Gasgenerators (50), und
· teils für eine Anzeigeeinheit - also z.B: für ein im Lenkrad (20) angebrachtes Lämpchen (34) - zur Anzeige der Funktionstüchtigkeit, bzw. zur Anzeige einer erkannten Funktionsuntüchtigkeit der Steuerelektronik (45) und/oder der Stromversorgung (11) aus dem Bordnetz und/oder der Zündpille des Gasgenerators (50) dienen.

13. Lenkrad-Anordnung nach Patentanspruch 11 oder 12,
**dadurch gekennzeichnet**, daß
- in der fertig montierten Lenkrad-Anordnung ein oder mehrere, z.B. zwei von sechs, Pole des Gehäusesteckers (42, 35) über ein Kabel (30) bzw. über einen Kabelbaum (30a, 30b) mit einem Zündpillenstecker (33) verbunden sind, und
- sich der in den Gasgenerator (50) des Airbag (60) gesteckte Zündpillenstecker (33) in der fertig montierten Lenkrad-Anordnung in einem engen Spalt zwischen dem Gehäuse (40) und dem Gasgenerator (50) befindet.

14. Lenkrad-Anordnung nach einem der Patentansprüche 11 bis 13,
**dadurch gekennzeichnet**, daß
- der, z.B. sechspolige, Gehäusestecker (42) oder mindestens einer der Gehäusestecker (42) in oder an der Oberseite (48) des Gehäuses (40) angebracht ist.

15. Lenkrad-Anordnung nach einem der Patentansprüche 11 bis 14,
**dadurch gekennzeichnet**, daß
- zumindest der oder die für die Stromversorgung dienenden Pole des Gehäusesteckers (42, 35) über ein entsprechend vieladriges Zwischenkabel (30, 30a) und über einen oder mehrere Anschlüsse (13) eines Leitungs-Zwischenstückes mit dem Stromversorgungs-Bordnetz des Fahrzeuges verbunden sind, und
- das Leitungs-Zwischenstück spiralförmig um die Lenkspindel (1) so locker gewickelt ist, daß es , beim Drehen des Lenkrades (20) in beide Drehrichtungen bis zum jeweiligen Anschlag, nicht beschädigt wird.

16. Lenkrad-Anordnung nach Patentanspruch 15,
**dadurch gekennzeichnet**, daß
- das spiralförmig gewickelte Leitungs-Zwischenstück in einer auf der Rückseite der Lenkradnabe (22) befestigten Kapsel (10) untergebracht ist.

17. Einheit (40/41), enthaltend das Gehäuse (40) und die mit dem Gehäuse (40) starr verbundene Mutter (41), für eine Lenkrad-Anordnung nach einem der vorhergehenden Patentansprüche.

## Claims

1. Steering wheel arrangement for a motor vehicle whose steering wheel (20) can be fastened on an end thread (2) of a steering spindle (1) by a nut (41) by means of a continuous central hole (21), containing
- an airbag (60) fastened to the steering wheel (20) in the region of the steering wheel hub (22), and
- a casing (40), likewise fastened to the steering wheel (20), of control electronics (45) controlling the inflation of the airbag (60) in the case of an accident,
. the bottom of the casing (40) fastened to the steering wheel (20) being directed towards the steering wheel hub (22) and therefore towards the central hole (21) and
. the top (48), opposite the bottom, of the casing (40) fastened to the steering wheel (20) being directed away from the steering wheel hub (22), i.e. approximately in the direction of the later position of the driver of the vehicle,
characterised in that
- the bottom of the casing (40) and the nut (41) are rigidly connected together to form a unit (40/41), i.e. are welded together for example, and,
- therefore, the casing (40) can be fastened to the steering wheel (20) by screwing the nut (41) onto the end thread (2).

2. Steering wheel arrangement according to Patent Claim 1,
characterised in that
- the nut (41) or its nut thread (41) is mounted at the bottom of the casing (40), at least partially recessed into the casing (40).

3. Steering wheel arrangement according to Patent Claim 2,
characterised in that
- the prefabricated nut (41) is pressed into a preformed flange of the bottom of the casing (40).

4. Steering wheel arrangement according to Patent Claim 2,
characterised in that
- the nut (41) forms a steel insert part (41) which (41) is encompassed by a flange manufactured by diecasting, which flange is mounted in the bottom of the casing (40).

5. Steering wheel arrangement according to Patent Claim 1 or 2,
characterised in that
- the nut (41), together with the bottom of the casing (40), forms a unit (40/41) cast in one piece, e.g. a diecasting unit (40/41), the nut thread (41) of which diecasting unit (40/41) being produced by the casting die and/or by subsequent thread-cutting.

6. Steering wheel arrangement according to one of the preceding patent claims,
characterised in that
- the casing (40), when viewed in the direction towards its (40) top (48) parallel to the centre line of the steering spindle (1), has side surfaces (43) for screwing purposes on its (40) profile, which side surfaces (43) more or less correspond to the surfaces of a nut to be encompassed by a spanner.

7. Steering wheel arrangement according to one of the preceding patent claims,
characterised in that
- the casing (40), when viewed in the direction towards its (40) top (48) parallel to the centre line of the steering spindle (1), has side surfaces for screwing purposes on its (40) profile, which side surfaces have grooves or recesses (44a) and/or knobs or protuberances.

8. Steering wheel arrangement according to one of the preceding patent claims,
characterised in that
- the top (48) of the casing (40) has holes (44) for screwing by means of a tool, which has hooks or pins which can be inserted in these holes (44).

9. Steering wheel arrangement according to one of the preceding patent claims,
characterised in that
- at least one single crash sensor (46, 47) is mounted in or on the casing (40).

10. Steering wheel arrangement according to one of the preceding patent claims,
characterised in that
- at least one single crash sensor (47) is mounted on the casing (40) centred with the centre line of the nut (41) in such a way that after the nut (41) has been screwed onto the end thread (2) of the steering spindle (1), the crash sensor (47) is located in a recess or hole located in the centre line of the end thread (2).

11. Steering wheel arrangement according to one of the preceding patent claims,
characterised in that
- the unit (40/41) or casing (40) has one or a plurality of multi-pole casing plugs (42, 35),
. partly for the electricity supply of the electrical components (45) contained in it (40) and
. partly for signal emission to the outside from the casing (40).

12. Steering wheel arrangement according to Patent Claim 11,
characterised in that
- the casing plug (42, 35) or one or a plurality of casing plugs (42, 35) have one or a plurality, for example a total of six, poles which are used
. partly for the electricity supply,
. partly for the control of the ignition pill of the gas generator (50), and
. partly for a display unit - i.e. for a light (34) mounted in the steering wheel (20) for indicating the functional serviceability, or for indicating a detected functional unserviceability of the control electronics (45) and/or of the electricity supply (11) from the on-board network and/or of the ignition pill of the gas generator (50).

13. Steering wheel arrangement according to Patent Claim 11 or 12,
characterised in that
- in the fully-fitted steering wheel arrangement, one or a plurality, for example two from six, poles of the casing plug (42, 35) are connected via a cable (30) or via a cable harness (30a, 30b) to an ignition pill plug (33), and
- in the fully-fitted steering wheel arrangement, the ignition pill plug (33) inserted into the gas generator (50) of the airbag (60) is located in a narrow gap between the casing (40) and the gas generator (50).

14. Steering wheel arrangement according to one of Patent Claims 11 to 13,
characterised in that
- the, for example, six-pole, casing plug (42) or at least one of the casing plugs (42) is mounted in or on the top (48) of the casing (40).

15. Steering wheel arrangement according to one of Patent Claims 11 to 14,
characterised in that
- at least the pole, or the poles of the casing plug (42, 35) used for the electricity supply, are connected to the electricity supply on-board network of the vehicle via a corresponding multi-core intermediate cable (30, 30a) and via one or a plurality of connections (13) of a conductor intermediate piece, and
- the conductor intermediate piece is loosely wound in spiral shape around the steering spindle (1) in such a way that it is not damaged on rotation of the steering wheel (20) in the two rotational directions as far as the respective stop.

16. Steering wheel arrangement according to Patent Claim 15,
characterised in that
- the conductor intermediate piece wound in spiral shape is accommodated in a capsule (10) fastened to the back of the steering wheel hub (22).

17. Unit (40/41), containing the casing (40) and the nut (41) rigidly connected to the casing (40), for a steering wheel arrangement according to one of the preceding patent claims.

## Revendications

1. Agencement à volant d'un véhicule, dont le volant (20) peut être fixé au moyen d'un trou central traversant (21) sur un filetage d'extrémité (2) d'une broche de braquage (1) au moyen d'un écrou (41), contenant
- un air-bag (60) fixé au volant (20) au niveau du moyeu (22) du volant, et
- un boîtier (40), fixé également sur le volant (20), d'une unité électronique de commande (45), qui, en cas d'accident, commande le gonflage de l'air-bag (60), le boitier (40) fixé au volant (20) étant tourné
. par sa face inférieure (40) en direction du moyeu (22) du volant et par conséquent du trou central (21), ainsi que
. par sa face supérieure (48) située à l'opposé de la face inférieure (40), à l'opposé du moyeu (22) du volant, c'est-à-dire presque dans la direction tournée vers la position ultérieure du conducteur du véhicule,
caractérisé par le fait que
- la face inférieure du boîtier (40) et l'écrou (41) sont reliés rigidement entre eux, c'est-à-dire par exemple par soudage, pour former une unité (40/41), et
- de ce fait le boîtier (40) peut être fixé sur le volant (20) par vissage de l'écrou (41) sur le filetage d'extrémité (2).

2. Agencement à volant suivant la revendication 1, caractérisé par le fait que
- l'écrou (41) ou son taraudage (41) est disposé sur la face inférieure du boîtier (40), au moins en renfoncement dans ce boîtier (40).

3. Agencement à volant suivant la revendication 2, caractérisé par le fait que
- l'écrou préfabriqué (41) est enfoncé dans une bride préformée de la face inférieure du boîtier (40).

4. Agencement à volant suivant la revendication 2, caractérisé par le fait que
- l'écrou (41) forme une pièce d'insertion en acier (41), qui est entourée par une bride formée par coulée sous pression et qui est disposée dans la face inférieure du boîtier (40).

5. Agencement à volant suivant la revendication 1 ou 2, caractérisé par le fait que
- l'écrou (41) forme, avec la face inférieure du boîtier (40), une unité (40/41) coulée d'un seul tenant, par exemple une unité formant pièce coulée sous pression (40/41), dont le taraudage (41) de l'écrou est formé au moyen du moule de coulée et/ou au moyen d'une opération ultérieure de taraudage.

6. Agencement à volant suivant l'une des revendications précédentes, caractérisé par le fait que
- en regardant en direction de la face supérieure (48) du boîtier (40), ce dernier comporte, parallèlement à l'axe de la broche de braquage (1), pour le vissage au niveau de son contour (40), des surfaces latérales (43), qui correspondent plus ou moins aux surfaces d'un écrou, qui doivent être saisies au moyen d'une clé anglaise.

7. Agencement à volant suivant l'une des revendications précédentes, caractérisé par le fait que
- en regardant en direction de la face supérieure (48) du boîtier (40), ce dernier comporte, parallèlement à l'axe de la broche de braquage (1), pour le vissage au niveau de son contour (40), des surfaces latérales, qui possèdent des rainures ou des évidements (44a) et/ou des boutons ou des protubérances.

8. Agencement à volant suivant l'une des revendications précédentes, caractérisé par le fait que
- la face supérieure (48) du boitier (40) comporte des trous (44) pour le vissage à l'aide d'un outil, qui possède des crochets ou des broches enfichables dans ces trous.

9. Agencement à volant suivant l'une des revendications précédentes, caractérisé par le fait que
- également au moins un seul détecteur de crash (46,47) est disposé dans ou sur le boîtier (40).

10. Agencement à volant suivant l'une des revendications précédentes, caractérisé par le fait que
- au moins un seul capteur de crash (47) est disposé sur le boîtier (40) d'une manière centrée sur l'axe de l'écrou (41) de sorte qu'après le vissage de l'écrou (41) sur le filetage d'extrémité (2) de la broche de braquage (1), le capteur de crash (47) est situé dans un évidement ou un perçage présent sur l'axe du filetage d'extrémité (2).

11. Agencement à volant suivant l'une des revendications précédentes, caractérisé par le fait que
- l'unité (40/41) ou le boîtier (40) possède
. en partie pour l'alimentation en courant de composants électriques (45) que le boitier (40) contient, et
. en partie pour la délivrance de signaux à l'extérieur hors du boitier (40),
un ou plusieurs connecteurs multipolaires (42,35).

12. Agencement à volant suivant la revendication 11, caractérisé par le fait que
- le connecteur (42,35) du boitier ou plusieurs des connecteurs (42,35) du boîtier possèdent un ou plusieurs, par exemple au total six pôles, qui sont utilisés
. en partie pour l'alimentation en courant,
. en partie pour la commande de l'amorce du générateur de gaz (50), et
. en partie pour une unité d'affichage - c'est-à-dire par exemple : pour une petite lampe (34) montée dans le volant (20) - pour l'affichage de l'aptitude de fonctionnement ou pour l'affichage d'une aptitude identifiée de fonctionnement de l'unité électronique de commande (45) et/ou de l'alimentation en courant (11) à partir du réseau de bord et/ou de l'amorce du générateur de gaz (50).

13. Agencement à volant suivant la revendication 11 ou 12, caractérisé en ce que
- dans le dispositif à volant monté à l'état terminé, un ou plusieurs, par exemple deux parmi six, pôles du connecteur (42,35) du boîtier sont raccordés par l'intermédiaire d'un câble (30) ou d'un faisceau de câbles (30a, 30b), à un connecteur d'amorce (33), et
- le connecteur d'amorce (33), enfiché dans le générateur de gaz (50) de l'air-bag (60), est situé, dans le dispositif à volant monté à l'état terminé, dans une fente étroite présente entre le boîtier (40) et le générateur de gaz (50).

14. Agencement à volant suivant l'une des revendications 11 à 13, caractérisé par le fait
- le connecteur de boîtier (42) par exemple hexapolaire ou au moins l'un des connecteurs de boîtier (42) est monté dans ou sur la face supérieure (48) du boîtier (40).

15. Agencement à volant suivant l'une des revendications 11 à 14, caractérisé en ce que
- au moins le ou les pôles, utilisés pour l'alimentation en courant, du connecteur de boîtier (42, 35) sont reliés par l'intermédiaire d'un câble intermédiaire (30,30a) possédant un nombre correspondant de conducteurs, et par l'intermédiaire d'une ou de plusieurs bornes (13) d'une section intermédiaire de ligne au réseau de bord d'alimentation en courant du véhicule, et
- l'élément intermédiaire de ligne est enroulé sous forme hélicoïdale autour de la broche de braquage (1) d'une manière suffisamment lâche pour qu'il ne soit pas endommagé lors de la rotation du volant (20) dans les deux sens de rotation jusqu'à la position de butée respective.

16. Agencement à volant suivant la revendication 15, caractérisé par le fait que
- l'élément intermédiaire de ligne enroulé sous forme hélicoïdale est logé dans une capsule (10) fixée sur la face arrière du moyeu (22) du volant.

17. Unité (40/41) contenant le boitier (40) et l'écrou (41) raccordé rigidement au boîtier (40), pour un agencement à volant suivant l'une des revendications précédentes.
